# EUROPEAN PATENT SPECIFICATION

(11) **EP 4 227 461 B1**
(45) Date of publication and mention of the grant of the patent: **29.05.2024**
(21) Application number: 23152211.1
(22) Date of filing: 18.01.2023
(51) Int. Cl.: D21C 7/06, D21C 7/12

(54) **MEASURING SYSTEM OF A FEEDER**
MESSSYSTEM EINES SPEISERS
SYSTÈME DE MESURE D'UN DISPOSITIF D'ALIMENTATION

(30) Priority: 10.02.2022 FI 20225114
(43) Date of publication of application: 16.08.2023
(73) Proprietor: Valmet Technologies Oy, 02150 Espoo (FI)
(72) Inventor: KETTUNEN, Heikki, 04400 Järvenpää (FI); NIEMINEN, Kaale, 40340 Jyväskylä (FI)
(74) Representative: Berggren Oy

(56) References cited:
- WO-A1-2004/079086
- US-A- 5 597 446
- US-B2- 9 523 462

## Description

### Technical field

In general, the present invention relates to feeders for pulp lines, in particular high pressure feeders and low pressure feeders and more particularly to feeders for feeding wood chips to the pulp line. More especially the present invention relates to a measuring system of a feeder according to preamble part of the independent measuring system claim.

### Background

Typically feeders have a rotor mounted inside a feeder housing. At outlet end of the feeder housing there are wear surfaces, one of which is attached to the rotor end. Between the wear surfaces the wood chips are pressed as the rotor rotates. These wear surfaces wear during the use and this the axial position of the rotor is moved by rotating a hand wheel at selected intervals to compensate the wear. Thus, the position of the feeder rotator is typically followed with a mechanical ruler attached to the feeder to indicate the axial position of the rotor relative to the feeder housing. In order to have continuous data log and trend follow-up measurement should be digital, but mechanical connections to measure adjustment easily makes the use of feeder more difficult and the measuring systems are vulnerable to damages.

In patent application publication SE1951117A1 is disclosed an electronic scale arrangement configured to be mounted on a continuous digester feeder for measuring the position of a rotor in a housing of the continuous digester, the electronic scale arrangement comprising a magnetic position sensor and a magnet, wherein the magnetic position sensor is configured to sense the position of the magnet, and wherein the position of the magnet indicates the position in an axial direction of the rotor relative to the housing of the continuous digester feeder. The electronic scale arrangement further comprising means for translating a rotational movement of the hand wheel into a linear movement of the magnet, wherein the hand wheel is configured to move the rotor in an axial direction inside the housing of the continuous digester feeder, when the hand wheel is rotated. The means for translating a rotational movement of the hand wheel into a linear movement of the magnet comprises a rod attached to the magnet and a flange mounted on the hand wheel, where the rod is arranged to be pushed in an axial direction by the flange, so that the rod and the magnet are movable together in the axial direction in relation to the housing of the continuous digester feeder. This known arrangement is rather complicated and needs cable arrangement installations, for power and for transmitting the measurement data. Due to its configuration careful calibration to eliminate errors coming from installation of parts on the fixed part and on the moving part is required. Also, depending on the mechanical set-up of this known system only partial calibration may be possible and full calibration may not even be possible, because the maintained rotor with full thickness of wear surfaces cannot be moved the full movement span of the use period.

### Summary

An object of the invention is to create a measuring system of a feeder, in which the disadvantages of the prior art are eliminated or at least minimized.

A particular object of the invention a measuring system of a feeder, which is simple of configuration and needs no cable installations.

A particular object of the invention a measuring system of a feeder, which can be installed to its location as ready-to-measure.

To achieve the objects mentioned above and those that will be discussed later the measuring system of the feeder according to the invention is mainly characterized by the features of the characterizing part of the independent measuring system claim.

Advantageous features and embodiments of the invention are defined in the dependent claims.

According to the invention the measuring system of the feeder, which feeder comprises a feeder rotor located inside a feeder housing, an adjustment shaft, on which the feeder rotor is mounted and which is rotatable, an adjustment wheel mounted at a first end of the adjustment shaft and configured to move the feeder rotor in an axial direction inside the feeder housing of the feeder, when the adjustment wheel is rotated, wherein the measuring system comprises a measuring device located on the adjustment wheel or on the adjustment shaft, wherein the measuring device comprises at least one angle sensor configured to measure angular movement of the adjustment wheel or the adjustment shaft, when the adjustment wheel is rotated, to define the axial movement of the feeder rotor, when the adjustment wheel is rotated.

According to an advantageous feature of the invention the measuring system further comprises a data log, display and/or control unit wirelessly connected to the measuring device configured to receive measurement data from the measuring device.

According to an advantageous feature of the invention the measuring device of the measuring system comprises a battery configured to provide power for the measuring device and for the sensor/-s thereof.

According to an advantageous feature of the invention the measuring device is located in a box-like frame, which is of polymeric material or of metallic material with polymeric cover or of metallic material.

According to an advantageous feature of the invention the size of the box-like frame is smaller than 0.2 m by each side, excluding possible attachment plates to the feeder adjustment wheel or the rotor shaft.

According to an advantageous feature of the invention the size of the box-like frame is smaller than 0.1 m by each side, excluding possible attachment plates to the feeder adjustment wheel or the rotor shaft.

According to the invention the measurement of the angle sensor/-s is/are based on gravity, gyroscope, compass or on a combination of two or more of these.

According to an advantageous feature of the invention the angle sensor/-s is/are a small accelerator sensor/s.

According to an advantageous feature of the invention the battery comprises one or more batteries or battery units.

According to an advantageous feature of the invention the battery may be replaceable or rechargeable.

According to an advantageous aspect of the invention the measuring system of the feeder comprises at least one sensor positioned on the adjustment wheel or on the adjustment shaft of the rotor of the feeder. The sensor is an angle sensor and thus, the measurement is based on rotation counts measured with angular measurement in comparison to gravity. Therefore, accurate axial position measurement data of the rotor relative to the feeder housing is received. The sensor is wirelessly connected to a data log, display and/or control unit for transmitting the measurement data. Advantageously, for mechanical design the measuring device with the sensor/- s is located in a small box-like frame, which is of polymeric material or of metallic material with polymeric cover including internal antenna for wireless connection or of metallic material with surface mounted antenna for wireless connection. Thus, the frame is not affecting operation of the feeder nor is sensitive to be damaged. Advantageously the size of the box-like frame is smaller than 0.2 m, more advantageously smaller than 0.1 m, by each side, excluding possible attachment plates to the feeder adjustment wheel or the rotor shaft. The small size for example allows easy assembly. For power of the sensor and its operation the sensor is connected to a battery, which is also located in the box-like frame. The battery lifetime is selected to be long and in accordance with the feeder maintenance sequence. Typically, the battery lifetime is selected to be at least five years. The battery may comprise one or more batteries or battery units. The battery may be replaceable or rechargeable.

According to an advantageous aspect one or more angle sensor circuits positioned on the adjustment wheel or on the adjustment shaft of the rotor of the feeder. The more than one angle sensor circuits are used to increase accuracy. Based on the changes in the angular position the axial movement of the rotor inside the feeder housing can be calculated in respect of the starting data. Advantageously, as the adjustment shaft being is provided with a threading, the calculation can be based on the pitch of the treading.

The angle sensor/-s are advantageously based on gravity, gyroscope, compass (direction of magnetic field) or on a combination of two or more of these.

Advantageously the sensor is a small accelerator sensor, which easily provide the accuracy of 0.1 degree measurement.

According to an advantageous aspect of the invention the measuring system is battery operated and the measurement data is wirelessly transmitted to a data log, display and/or control unit. Thus, as the measuring system and especially the measuring device comprises no cables or like the measuring system, it does not disturb operating the wheel nor the operations of the feeder.

By the measuring system continuous and accurate information of the position of the rotor inside the feeder housing is provided. The measurement data can be saved in the data log, display and/or control unit and thus, changes in the operation of the rotor of the feeder can be inspected, the lifetime of the feeder can be predicted, the adjustment operations can be monitored and checked to be in accordance with an adjustment plan for the operation of the rotor of the feeder and the adjustment operations can be optimized to maximize the operation cycle.

The measurement data can be combined to rotor power measuring, for example in the data log, display and/or control device or in a control device of the feeder, whereby in the position adjustment of the rotor the power output and the lifetime of the rotor can be used in optimizing the used power consumption of the feeder.

By the invention and its advantageous features and aspects many advantages and benefits are achieved: as the measurement unit is combined, only one measurement part/component is to be attached on the moving part (the adjustment wheel or the rotor shaft) of the feeder and therefore easy and no high precision installations are needed at all to provide the measuring system to the feeder, which thus is beneficial in work amount and costs. Additionally, improved measurement accuracy is achieved as the measuring system has not several components attached on fixed and moving parts of feeder, as in the arrangements known from prior art. Accuracy of the rotor movement is easily at least on the level of 10 µm and it can be improved by providing more than one sensor circuit. The wireless data transmitting and the battery powered operation allows that no cables or like from the feeder to a measurement cabin are needed. This also provides for easy installation on the site. The measuring system needs decreased complexity in calibration and there is no need for high precision part installations and less danger of something changing during use of the feeder. The battery provides typically at least 5 years calculated battery lifetime. Typically, the feeder maintenance interval is about 2 years and thus, the battery has a long enough lifetime. Everything can be installed at a maintenance workshop outside the site and calibrated. On site only power and network are turned on and the measuring system starts-up automatically and thus, a real plug & play measuring system is achieved.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

### Brief description of the drawings

In the following the invention is further explained in detail with reference to the accompanying drawing in which:

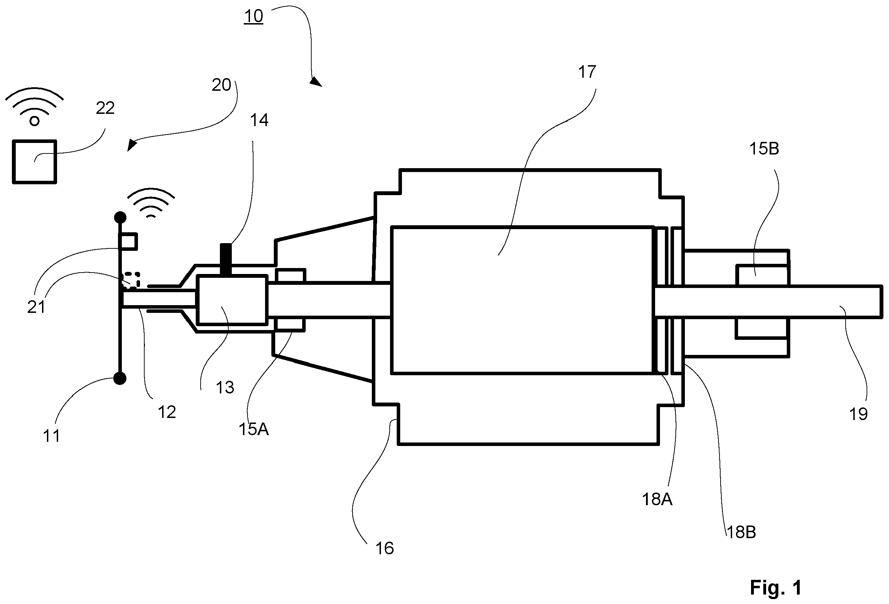

In figure 1 is schematically shown an advantageous example of a feeder.

### Detailed description

In the following description same reference signs designate for respective components etc. unless otherwise mentioned and it should be understood that the examples are susceptible of modification in order to adapt to different usages and conditions.

In the example of figure 1 is schematically shown an example of a measuring system 20 of a feeder 10. The feeder 10 comprises an adjustment wheel 11 for rotating an adjustment shaft 12 of a feeder rotor 17 located inside a feeder housing 16. The adjustment shaft 12 comprises threading. The adjustment shaft 12 has a rotor positioning connection 13 with a locking pin 14 for pushing and positioning the feeder rotor 17 and to lock it in the desired position. The adjustment shaft 13 has on each axial side of the feeder rotor 17 rotor shaft bearings 15A, 15B. On the opposite side of the feeder rotor 17 in respect of the side of the adjustment wheel 11 wear surfaces 18A, 18B of the feeder 10 are located. At the opposite end of the adjustment shaft 12 in respect of the end of the adjustment wheel 11 a drive connection 19 is located for providing power for rotating the feeder rotor 17. The feeder rotor 17 mounted inside the feeder housing has thus, at outlet end of the feeder housing the wear surfaces 18A, 18B, a first wear surface 18A, which is attached to the end face surface of the feeder rotor 17 and a second wear surface 18B, which is located at a distance from the first wear surface 18A in axial direction. Between the wear surfaces 18A, 18B for example wood chips are pressed as the feeder rotor 17 rotates. These wear surfaces 18A, 18B wear during the use and the axial position of the feeder rotor 17 is moved by rotating the adjustment wheel 11 at selected intervals to compensate the wear. After adjustment positioning the feeder rotor 17 is positioned to the selected position by the positioning connection 13 and the locking pin 14.

The measuring system 20 of the feeder 10 comprises at least one sensor in a measuring device 21 positioned on the adjustment wheel 11 or on the adjustment shaft 12 of the feeder rotor 17. The sensor is an angle sensor and thus, the measurement is based on rotation counts measured with angular measurement in comparison to gravity. Therefore, accurate axial position measurement data of the rotor relative to the feeder housing is received. The angle sensor/-s are advantageously based on gravity, gyroscope, compass (direction of magnetic field) or on a combination of two or more of these. Advantageously the sensor is a small accelerator sensor, which easily provide the accuracy of 0.1 degree measurement.

The sensor of the measuring device 21 is wirelessly connected to a data log, display and/or control unit 22 for transmitting the measurement data. The measurement data can be saved in the data log, display and/or control unit and thus, changes in the operation of the rotor of the feeder can be inspected, the lifetime of the feeder 10 can be predicted, the adjustment operations can be monitored and checked to be in accordance with an adjustment plan for the operation of the rotor of the feeder and the adjustment operations can be optimized to maximize the operation cycle.

Advantageously, for mechanical design the measuring device 21 with the sensor/-s is located in a small box-like frame, which is of polymeric material or metal with polymeric cover including internal antenna for wireless connection or of metallic material with surface mounted antenna for wireless connection. Thus, the frame not affecting operation of the feeder nor is sensitive to be damaged. Advantageously the size of the box-like frame is smaller than 0.2 m, more advantageously smaller than 0.1 m, by each side, excluding possible attachment plates to the feeder adjustment wheel or the rotor shaft. The small size for example allows easy assembly. For power of the sensor and its operation the sensor is connected to a battery, which is also located in the measuring device, advantageously in the box-like frame of it. The battery lifetime is selected to be long and in accordance with the feeder maintenance sequence. Typically, the battery lifetime is selected to be at least five years.

### Reference signs used in the drawing:

10 feeder
11 adjustment wheel
12 adjustment shaft
13 rotor positioning connection
14 locking pin
15A, 15B rotor shaft bearing
16 feeder housing
17 feeder rotor
18A, 18B wear surfaces
19 drive connection
20 measuring system
21 measuring device
22 data log, display and/or control unit

## Claims

1. Measuring system of a feeder, which feeder (10) comprises a feeder rotor (17) located inside a feeder housing (16), an adjustment shaft (12), on which the feeder rotor (17) is mounted and which is rotatable, an adjustment wheel (11) mounted at a first end of the adjustment shaft and configured to move the feeder rotor (17) in an axial direction inside the feeder housing (16) of the feeder (10), when the adjustment wheel (11) is rotated, which measuring system (20) comprises a measuring device (21) located on the adjustment wheel (11) or on the adjustment shaft (12), which measuring device (21) comprises at least one angle sensor configured to measure angular movement of the adjustment wheel (11) or the adjustment shaft (12), when the adjustment wheel (11) is rotated, to define the axial movement of the feeder rotor (17), when the adjustment wheel (11) is rotated, **characterized in that** the measurement of the angle sensor/-s is/are based on gravity, gyroscope, compass or on a combination of two or more of these.

2. Measuring system according to claim 1, **characterized in that** the measuring system (20) further comprises a data log, display and/or control unit (22) wirelessly connected to the measuring device (21) configured to receive measurement data from the measuring device (21).

3. Measuring system according to claim 1 or 2, **characterized in that** the measuring device (21) of the measuring system (20) comprises a battery configured to provide power for the measuring device (21) and for the sensor/-s thereof.

4. Measuring system according to any of claims 1 - 3, **characterized in that** the measuring device (21) is located in a box-like frame, which is of polymeric material or of metallic material with polymeric cover or of metallic material.

5. Measuring system according to claim 4, **characterized in that** the size of the box-like frame is smaller than 0.2 m by each side.

6. Measuring system according to claim 4, **characterized in that** the size of the box-like frame is smaller than 0.1 m by each side.

7. Measuring system according to any of claims 1 - 6, **characterized in that** the angle sensor/-s is/are a small accelerator sensor/s.

8. Measuring system according to any of claims 3-7, **characterized in that** the battery comprises one or more batteries or battery units.

9. Measuring system according to any of claims 3-8, **characterized in that** the battery may be replaceable or rechargeable.

## Patentansprüche

1. Messsystem für eine Speiseeinrichtung, wobei die Speiseeinrichtung (10) einen Speiseeinrichtungsrotor (17), der innerhalb eines Speiseeinrichtungsgehäuses (16) angeordnet ist, eine Einstellungswelle (12), an welcher der Speiseeinrichtungsrotor (17) angebracht ist und die drehbar ist, ein Einstellungsrad (11), das an einem ersten Ende der Einstellungswelle (12) angebracht und dafür konfiguriert ist, den Speiseeinrichtungsrotor (17) in einer axialen Richtung innerhalb des Speiseeinrichtungsgehäuses (16) der Speiseeinrichtung (10) zu bewegen, wenn das Einstellungsrad (11) gedreht wird, umfasst, wobei das Messsystem (20) eine Messvorrichtung (21) umfasst, die sich an dem Einstellungsrad (11) oder an der Einstellungswelle (12) befindet, wobei die Messvorrichtung (21) mindestens einen Winkelsensor umfasst, der dafür konfiguriert ist, eine Winkelbewegung des Einstellungsrades (11) oder der Einstellungswelle (12) zu messen, wenn das Einstellungsrad (11) gedreht wird, um die axiale Bewegung des Speiseeinrichtungsrotors (17) zu definieren, wenn das Einstellungsrad (11) gedreht wird, **dadurch gekennzeichnet, dass** die Messung des/der Winkelsensors/-sensoren auf Schwerkraft, Kreiselgerät, Kompass oder auf einer Kombination von zwei oder mehr von diesen beruht.

2. Messsystem nach Anspruch 1, **dadurch gekennzeichnet, dass** das Messsystem (20) ferner eine Datenaufzeichnungs-, Anzeige- und/oder Steuerungseinheit (22) umfasst, die drahtlos mit der Messvorrichtung (21) verbunden ist, wobei sie dafür konfiguriert ist, Messdaten von der Messvorrichtung (21) zu empfangen.

3. Messsystem nach Anspruch 1 oder 2, **dadurch gekennzeichnet, dass** die Messvorrichtung (21) des Messsystems (20) eine Batterie umfasst, die dafür konfiguriert ist, Energie für die Messvorrichtung (21) und für den/die Sensor(en) derselben bereitzustellen.

4. Messsystem nach einem der Ansprüche 1 bis 3, **dadurch gekennzeichnet, dass** sich die Messvorrichtung (21) in einem kastenartigen Rahmen befindet, der aus einem Polymermaterial oder aus einem metallischen Material mit einer Polymerummantelung oder aus einem metallischen Material besteht.

5. Messsystem nach Anspruch 4, **dadurch gekennzeichnet, dass** die Größe des kastenartigen Rahmens kleiner als 0,2 m auf jeder Seite ist.

6. Messsystem nach Anspruch 4, **dadurch gekennzeichnet, dass** die Größe des kastenartigen Rahmens kleiner als 0,1 m auf jeder Seite ist.

7. Messsystem nach einem der Ansprüche 1 bis 6, **dadurch gekennzeichnet, dass** der/die Winkelsensor(en) (ein) kleine(r) Beschleunigungssensor(en) ist/sind.

8. Messsystem nach einem der Ansprüche 3 bis 7, **dadurch gekennzeichnet, dass** die Batterie eine oder mehrere Batterien oder Batterieeinheiten umfasst.

9. Messsystem nach einem der Ansprüche 3 bis 8, **dadurch gekennzeichnet, dass** die Batterie auswechselbar oder wiederaufladbar ist.

## Revendications

1. Système de mesure d'un dispositif d'alimentation, lequel dispositif d'alimentation (10) comprend un rotor de dispositif d'alimentation (17) situé à l'intérieur d'un boîtier de dispositif d'alimentation (16), une tige de réglage (12) sur laquelle le rotor de dispositif d'alimentation (17) est monté et qui peut tourner, une molette de réglage (11) montée à une première extrémité de la tige de réglage et configurée pour déplacer le rotor de dispositif d'alimentation (17) dans un sens axial à l'intérieur du boîtier de dispositif d'alimentation (16) du dispositif d'alimentation (10) lorsque la molette de réglage (11) est tournée, lequel système de mesure (20) comprend un dispositif de mesure (21) situé sur la molette de réglage (11) ou sur la tige de réglage (12), lequel dispositif de mesure (21) comprend au moins un capteur d'angle configuré pour mesurer le mouvement angulaire de la molette de réglage (11) ou de la tige de réglage (12) lorsque la molette de réglage (11) est tournée, afin de définir le mouvement axial du rotor de dispositif d'alimentation (17) lorsque la molette de réglage (11) est tournée, **caractérisé en ce que** la mesure du ou des capteurs d'angle est basée sur la gravité, un gyroscope, une boussole ou une combinaison de deux ou plus de ceux-ci.

2. Système de mesure selon la revendication 1, **caractérisé en ce que** le système de mesure (20) comprend en outre une unité de journal de données, d'affichage et/ou de commande (22) connectée sans fil au dispositif de mesure (21) et configurée pour recevoir des données de mesure de la part du dispositif de mesure (21).

3. Système de mesure selon la revendication 1 ou 2, **caractérisé en ce que** le dispositif de mesure (21) du système de mesure (20) comprend une pile configurée pour fournir du courant pour le dispositif de mesure (21) et pour son ou ses capteurs.

4. Système de mesure selon l'une quelconque des revendications 1 à 3, **caractérisé en ce que** le dispositif de mesure (21) se trouve dans un châssis de type boîte qui est en matériau polymérique ou en matériau métallique avec un capot en matériau polymérique ou métallique.

5. Système de mesure selon la revendication 4, **caractérisé en ce que** la taille du châssis de type boîte est inférieure à 0,2 m sur chaque côté.

6. Système de mesure selon la revendication 4, **caractérisé en ce que** la taille du châssis de type boîte est inférieure à 0,1 m sur chaque côté.

7. Système de mesure selon l'une quelconque des revendications 1 à 6, **caractérisé en ce que** le ou les capteurs d'angle sont des petits capteurs d'accélération.

8. Système de mesure selon l'une quelconque des revendications 3 à 7, **caractérisé en ce que** la pile comprend une ou plusieurs piles ou unités de piles.

9. Système de mesure selon l'une quelconque des revendications 3 à 8, **caractérisé en ce que** la pile peut être remplaçable ou rechargeable.
